# FASCICULE DE BREVET EUROPEEN

(11) **EP 3 520 322 B1**
(45) Date de publication et mention de la délivrance du brevet: **25.11.2020**
(21) Numéro de dépôt: 17787501.0
(22) Date de dépôt: 29.09.2017
(51) Int. Cl.: H04L 12/12, H04L 29/12, H04W 52/02

(54) **PROCÉDÉ ET DISPOSITIF DE RÉVEIL À DISTANCE D'UN ÉQUIPEMENT CONNECTÉ À UN RÉSEAU**
VERFAHREN UND VORRICHTUNG ZUM REMOTE-AUFWECKEN EINER MIT EINEM NETZWERK VERBUNDENEN VORRICHTUNG
METHOD AND APPARATUS FOR REMOTELY WAKING UP A DEVICE CONNECTED TO A NETWORK

(30) Priorité: 30.09.2016 FR 1659430
(43) Date de publication de la demande: 07.08.2019
(73) Titulaire: ORANGE, 75015 Paris (FR)
(72) Inventeur: FONTAINE, Fabrice, 92326 Châtillon Cedex (FR); LEPOIL, Elisabeth, 92326 Châtillon Cedex (FR)
(86) Numéro de dépôt international: PCT/FR2017/052664
(87) Numéro de publication internationale: WO 2018/060648

(56) Documents cités:
- WO-A1-2007/069046
- US-A1- 2010 226 321
- US-A1- 2015 095 680

## Description

### Domaine technique

L'invention concerne le domaine des télécommunications et plus particulièrement un procédé et dispositif de réveil d'un équipement connecté à un réseau.

### Etat de la technique

Une technique connue de réveil à distance d'un équipement est décrite dans le document EP 1 798 890.

Une technique connue de réveil d'un équipement dans un réseau local domestique (LAN, pour « Local Area Network » en anglais) est d'utiliser une technique dite Wake-on-LAN (WoL) ou Wake on Wireless LAN (WoWLAN) selon que l'équipement est connecté sans fil avec un dispositif d'accès, tel qu'une passerelle domestique, par exemple en Wi-Fi, ou avec un fil par exemple un câble Ethernet.

Ces deux techniques permettent de réveiller un équipement qui est passé préalablement en veille (suspend-to-ram ou suspend-to-disk) en envoyant un paquet en mode diffusion (broadcast en anglais), appelé « paquet magique » par l'homme du métier, sur le réseau LAN. Lors de la réception de ce paquet, l'équipement se réveille.

Aussi, les équipements du réseau local peuvent communiquer avec un dispositif d'accès via une interface choisie parmi plusieurs interfaces disponibles. Par exemple un décodeur peut communiquer avec un dispositif d'accès via une interface Ethernet ou via une interface Wi-Fi, au choix.

Dans cette configuration, à un instant t, le décodeur est connecté avec le dispositif d'accès soit en Ethernet avec une première adresse privée @MAC1, soit en Wi-Fi avec une deuxième adresse privée @MAC2.

Rappelons que le dispositif d'accès s'intercale entre le réseau LAN et un autre réseau, par exemple un réseau étendu WAN (sigle anglo-saxon de « Wide Area Network ») ou un réseau mobile 3G ou équivalent.

Dans certaines configurations, au niveau du réseau WAN, en particulier des plateformes de service, seule une adresse d'interface est transmise aux plateformes par exemple la première @MAC1 pour identifier le décodeur. En conséquence, le décodeur ne peut être réveillé depuis les plateformes que par le biais de l'adresse @MAC1 via l'interface Ethernet. Or, il se peut que l'interface en cours d'utilisation au moment de la réception de la demande de réveil (par exemple l'interface Wi-Fi) soit l'interface Wi-Fi ; dans cette configuration, l'équipement ne peut être réveillé.

L'invention offre une solution ne présentant pas les inconvénients de l'état de la technique.

### L'invention

A cet effet, selon un aspect fonctionnel, l'invention a pour objet un procédé de réveil d'un équipement connecté tel que défini dans la revendication 1.

Selon l'invention, le dispositif d'accès a accès à une mémoire dans laquelle sont stockées les adresses liées à tout ou partie des interfaces de communication susceptibles d'être utilisées sur un équipement à réveiller. Suite à l'obtention des adresses, une demande de réveil émise par le dispositif d'accès à destination de l'équipement entraînera assurément le réveil de l'équipement quelle que soit l'adresse reçue depuis le premier réseau et quelle que soit l'interface en cours d'utilisation sur l'équipement à réveiller.

L'invention garantit le réveil à distance d'un équipement ayant plusieurs interfaces, et donc plusieurs adresses privées, à la base d'une seule adresse privée émise depuis une plateforme de services. En d'autres mots, si l'interface utilisée sur l'équipement est une première interface (par exemple l'interface Wi-Fi) et que la demande de réveil reçue par le dispositif d'accès concerne la deuxième interface (par exemple l'interface Ethernet), le dispositif d'accès va pouvoir réveiller l'équipement en retrouvant l'adresse liée à la première interface par recoupement.

Selon l'invention, la commande est transmise à toutes les interfaces, actives ou inactives ; Ce mode de mise en œuvre de l'invention garanti que la demande de réveil sera reçue par la bonne interface à savoir l'interface active.

Selon un premier mode de mis en œuvre particulier de l'invention, qui pourra être mis en œuvre alternativement ou cumulativement avec le précédent, le dispositif d'accès mémorise l'adresse de la dernière interface utilisée ; et lors de l'étape de transmission, une commande de réveil est transmise avec cette adresse si celle-ci résulte de l'étape de recoupement. Dans ce deuxième mode, une seule commande de réveil est transmise à la différence du premier mode dans lequel plusieurs commandes sont transmises « à l'aveugle », c'est-à-dire sans chercher à déterminer quelle interface est en cours d'utilisation sur l'équipement à réveiller.

Selon encore un autre mode de mis en œuvre particulier de l'invention, qui pourra être mis en œuvre alternativement ou cumulativement avec les précédents, le dispositif d'accès stocke un historique des interfaces utilisées en fonction du temps, en ce que l'adresse de l'équipement à réveiller est déterminée en fonction de l'heure courante ; et en ce qu'une commande de réveil est transmise avec cette adresse si celle-ci résulte de l'étape de recoupement. Comme dans le deuxième mode, une seule commande de réveil est transmise à la différence du premier mode dans lequel plusieurs commandes sont transmises à l'aveugle.

Les deux derniers modes ont pour avantage de réduire le nombre de commandes de réveil à transmettre dans le réseau local vers l'équipement à réveiller.

Selon un aspect matériel, l'invention se rapporte à un dispositif d'accès tel que défini dans la revendication 5.

Ce dispositif d'accès peut bien sûr comporter en termes structurels les différentes caractéristiques relatives au procédé de détection tel que décrit précédemment, qui peuvent être combinées ou prises isolément. Ainsi, les avantages énoncés pour le procédé de détection selon le premier aspect sont transposables directement au dispositif utilisateur. Par conséquent, ils ne sont pas détaillés plus amplement.

Selon un autre aspect matériel, l'invention a trait à un programme pour un dispositif d'accès, comprenant des instructions de code de programme destinées à commander l'exécution des étapes du procédé de détection décrites ci-dessus mises en œuvre par le dispositif, lorsque ledit programme est exécuté par ledit dispositif.

Selon un autre aspect matériel, l'invention a trait à un support d'enregistrement lisible par un dispositif utilisateur sur lequel est enregistré le programme décrit ci-dessus.

Les avantages énoncés pour le procédé de détection selon le premier aspect sont transposables directement au programme pour un dispositif utilisateur et au support d'enregistrement.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
La figure 2 illustre un paquet de données appelé paquet « magique » utilisé pour réveiller un équipement.
La figure 3 est vue schématique d'une table visée ci-dessus.
La figure 4 illustre les étapes d'un procédé de réveil selon un mode de réalisation de la présente invention.

### Description détaillée d'un (ou d') exemple(s) de réalisation illustrant l'invention

L'invention est applicable à tout équipement accédant à un réseau, que cet équipement soit un terminal informatique, un téléphone IP, un compteur électrique, un équipement domotique, etc. L'invention sera toutefois décrite dans le cas de son application au réveil à distance d'un terminal de type décodeur de télévision numérique. Dans notre exemple, ce décodeur a notamment une fonction d'enregistrement de contenus sur un disque dur présent sur le décodeur ou sur un disque du réseau de communication avec lequel il peut communiquer.

Réveiller un équipement consiste à le rendre actif alors qu'il est dans un état non actif, par exemple parce qu'il se trouve en état de veille prolongée ou temporaire. Cette activation ou mise en service a pour but de permettre une utilisation de cet équipement.

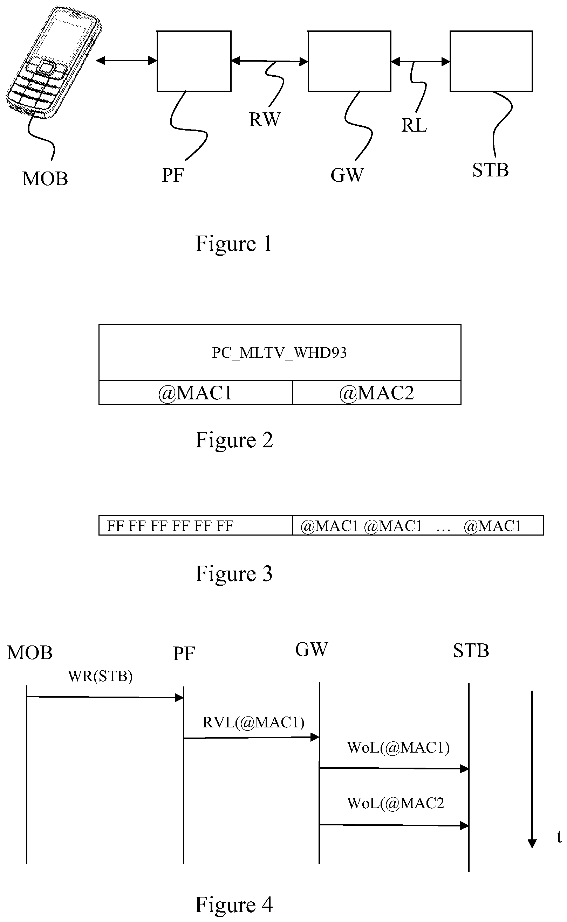

Un système de communication convenant à la mise en oeuvre de l'invention est représenté à la figure 1. Ce système comprend:
- un décodeur STB susceptible d'être en veille et ayant plusieurs interfaces de communications pour communiquer notamment avec un dispositif d'accès GW décrit ci-dessous ; dans notre exemple, le décodeur dispose de deux interfaces et donc deux adresses privées :
   ▪ avec une première adresse privée @MAC1 pour la première interface, par exemple une interface Ethernet ;
   ▪ avec une deuxième adresse @MAC2 pour la deuxième interface interface, par exemple une interface Wi-Fi.
- un dispositif d'accès GW pour l'accès à un réseau RW, et apte à gérer un réseau local (réseau LAN, Local Area Network) RL permettant au décodeur STB raccordé au réseau local RL d'accéder au réseau RW ou d'être accessibles à travers ce réseau RW;
- un premier réseau RW de télécommunication, sous forme de réseau étendu (réseau WAN, Wide Area Network), par exemple le réseau Internet;
- une plate-forme PF accessible via le réseau RW; cette plate-forme ne sera pas décrite en détails car sans intérêt pour l'exposé de l'invention. Cette plate-forme peut être un ordinateur ou un serveur voire une pluralité d'ordinateurs ou serveurs communiquant entre eux; on fait l'hypothèse que cette plate-forme a connaissance d'une seule adresse privée du décodeur STB par exemple @MAC1. Cette plate-forme a pour fonction, entres autres, sur réception d'une demande de réveil, de mettre en œuvre le réveil du décodeur STB en question. On comprend donc ici que la plate-forme ne peut requérir le réveil du décodeur STB que par le biais de l'adresse @MAC1 car elle ne connaît pas la seconde adresse @MAC2. Sur réception d'une requête WR(STB) concernant le décodeur STB, la plate-forme PF émettra une demande de réveil avec comme paramètre l'adresse @MAC1.

Rappelons ici qu'une adresse @MAC (sigle anglo-saxon de « Media Access Control ») est une adresse physique du décodeur dans le réseau local RL.

Le point d'accès GW a l'architecture matérielle d'un ordinateur conventionnel. Il comporte notamment un processeur, une mémoire vive de type et une mémoire morte dans laquelle est enregistré un programme d'ordinateur conforme à l'invention, ce programme comportant des instructions pour exécuter les étapes du procédé décrit en référence à la figure 4.

La figure 2 illustre un paquet, appelé « paquet magique » par l'homme du métier. Ce paquet contient des octets (FF FF FF FF FF FF) représentatif d'une adresse « Broadcast » suivi d'une adresse, par exemple l'adresse @MAC1, du décodeur à réveiller ; cette adresse est répétée 16 fois ; le paquet magique peut aussi inclure un mot de passe par exemple de quatre ou six octets.

La figure 3 illustre une table dans laquelle est stockée au moins une correspondance entre un identifiant d'équipement, dans notre exemple un identifiant du décodeur PC_MLTV_WHD93 et les adresses @MAC1 @MAC2 susceptibles d'être utilisées par le décodeur pour communiquer par le dispositif d'accès. L'exemple de réalisation illustré en référence à la figure 4, ci-dessous, décrit des exemples d'obtention d'une telle table de correspondances.

Un exemple de réalisation va maintenant être décrit en référence à la figure 4. Sur cette figure sont représentés des échanges protocolaires avec leur évolution dans le temps. Quatre axes sont associés respectivement au mobile MOB, à la plate-forme PF, au dispositif d'accès GW et au décodeur STB.

Lors d'une première phase (non représentée sur le figure 4), lors de la connexion d'un équipement au niveau IP, le dispositif d'accès, étant le routeur DHCP, celui-ci va recevoir au fil du temps des requêtes DHCP du décodeur via les différentes interfaces réseau de cet équipement. En particulier, elle recevra une requête DHCP du décodeur STB via l'interface Ethernet lorsque l'interface Ethernet est utilisée et via l'interface Wi-Fi lorsque l'interface Wi-Fi est utilisée.

A ce stade, en référence à la figure 2, le dispositif d'accès crée des correspondances entre adresses privées du décodeur dans le réseau local et un identifiant du décodeur STB ; le dispositif stocke ensuite ces correspondances, par exemple sous forme de table (cf. Figure 3), pour une utilisation ultérieure lors d'une deuxième phase.

Dans notre exemple, l'identifiant est choisi parmi les identifiants utilisés dans une requête DHCP et de préférence invariable pour un même équipement quelle que soit l'interface utilisée. Par exemple, dans cette requête DHCP, un champ désigné par « Option 77 (UserClassID) » est le même quel que soit l'interface utilisée sur le décodeur. Par exemple, pour le décodeur STB, UserClassID aura toujours la même valeur ; par exemple PC_MLTV_WHD93.

En définitive, le dispositif d'accès stocke des correspondances telles que :
@MAC1/ PC_MLTV_WHD93
@MAC2/ PC_MLTV_WHD93

D'autres paramètres invariables peuvent bien évidemment être utilisés comme par exemple un champ nommé « hostname » fourni par le décodeur dans sa requête DHCP. Supposons que ce champ ait la valeur « décodeur TV 4 ». Dans cette configuration le dispositif d'accès stocke les correspondances
@MAC1/ PC_MLTV_WHD93/décodeur TV 4
@MAC2/ PC_MLTV_WHD93/décodeur TV 4

L'identifiant choisi peut aussi être variable mais suffisant pour déduire qu'ils proviennent du même équipement.

Au lieu d'être créée automatiquement, la table peut aussi être créée par un utilisateur. Pour cela, l'utilisateur utilise par exemple un ordinateur connecté au point d'accès et stocke dans la mémoire du point d'accès la table en question. L'identifiant peut aussi être renseigné par un utilisateur ; par exemple, l'utilisateur peut renseigner un identifiant sur l'interface d'administration du dispositif d'accès.

On comprend ici que par recoupement entre correspondances existantes, à savoir dans notre exemple
@MAC1/ PC_MLTV_WHD93/décodeur TV 4
@MAC2/ PC_MLTV_WHD93/décodeur TV 4
le dispositif d'accès peut lier entre elles tout ou partie des adresses privées @MACi (i est un entier) relatives à un même équipement. En effet, ayant une correspondant du type A/B et une correspondance du type A/C (A,B,C étant des valeurs quelconques), on déduit par recoupement ou par transitivité que A/B/C sont liés. Rappelons qu'une relation transitive est une relation binaire pour laquelle une suite d'objets (identifiants, adresses, etc.) reliés consécutivement aboutit à une relation entre le premier et le dernier.

Dans notre exemple, on déduit que PC_MLTV_WHD93 (ou décodeur TV) est lié à l'adresse @MAC1 et à l'adresse @MAC2 et que donc les adresses @MAC1 et @MAC2 sont relatives au même équipement à savoir le décodeur STB.

A noter que les correspondances sont stockes dans une mémoire ; cette mémoire peut être la mémoire morte du dispositif d'accès GW ou une mémoire externe au dispositif d'accès GW.

Lors d'une deuxième phase, un équipement distant, le mobile MOB dans notre exemple va souhaiter réveiller le décodeur STB par exemple pour enregistrer un contenu sur son décodeur.

Cette deuxième phase comprend plusieurs étapes décrites ci-dessous.

Lors d'une première étape, le mobile MOB émet une commande d'enregistrement WR(STB) d'un contenu numérique quelconque. Dans notre exemple ce contenu est un contenu télévisé.

Cette commande est reçue lors d'une deuxième étape par la plate-forme PF offrant un service d'enregistrement de contenu. La plate-forme identifie le dispositif d'accès concerné. Dans notre exemple, comme indiqué précédemment, la plate-forme ne stocke qu'une adresse privée du décodeur STB, par exemple l'adresse @MAC1, sur les deux existantes. A noter que la plate-forme pourrait stocker d'autres adresses privées relatives au même équipement autres que l'adresse @MAC2.

Lors d'une troisième étape, la plate-forme connaissant l'adresse IP du dispositif d'accès émet une commande de réveil RVL (@MAC1) incluant l'adresse @MAC1 du décodeur, voire d'autres adresses en référence à la deuxième étape, à l'exception de l'adresse @MAC2.

Lors d'une quatrième étape, le dispositif d'accès GW reçoit la commande de réveil ; suite à la réception, le dispositif d'accès extrait l'adresse @MAC1 ; suite à l'extraction, le dispositif d'accès consulte la table de correspondances et retrouve toutes les adresses privées du même équipement grâce à la table de correspondances.

Dans notre exemple, ayant toutes les adresses du décodeur, à savoir @MAC1 et @MAC2, lors d'une cinquième étape, le dispositif d'accès GW émet au moins une commande de réveil WoL.

Plusieurs variantes sont possibles pour la réalisation de cette cinquième étape.

Une première variante consiste pour le dispositif d'accès à émettre une commande de réveil via les différentes liaisons de communication possibles avec le décodeur, dans notre exemple à la fois sur la liaison Wi-Fi et sur le lien Ethernet. Cette première variante se traduit par l'envoi de plusieurs commandes de réveil, les commandes incluant les adresses résultantes de l'étape de recoupement à savoir @MAC1 et @MAC2. Cette variante garantit que le décodeur recevra la commande de réveil WOL sur l'interface en cours d'utilisation ; la commande WOL envoyée sur la liaison non utilisée n'est pas reçue par le décodeur.

Le dispositif d'accès reçoit ensuite une requête DHCP de la part du décodeur via l'interface utilisée.

Deux autres variantes sont encore possibles et ont pour avantage de limiter le nombre de commandes de réveil WoL dans le réseau local RL.

Selon une deuxième variante, on suppose que le dispositif d'accès a accès à une mémoire dans laquelle est mémorisé quelle était la dernière adresse utilisée, par exemple @MAC2. Si l'adresse reçue par le dispositif d'accès n'est pas la même adresse, le dispositif d'accès réalise un recoupement grâce aux correspondances et si l'adresse mémorisée @MAC2 résulte de l'étape de recoupement, une commande est émise vers le décodeur avec l'adresse @MAC2.

Selon une deuxième variante, le point d'accès stocke un historique des interfaces utilisées en fonction du temps. Dans cette configuration, l'adresse du décodeur à réveiller est déterminée en fonction de l'heure courante et de cet historique ; une fois l'adresse déterminée, une commande est émise vers cette interface. Par exemple, si l'interface Wi-Fi est souvent utilisée le soir de 18h à 20h, l'adresse utilisée dans la commande de réveil sera l'adresse @MAC2 liée à l'interface Wi-Fi ; si l'interface utilisée entre 8 et 12h est l'interface Ethernet, l'adresse utilisée sera l'adresse @MAC1 liée à l'interface Ethernet. Aussi, au lieu d'être renseigné automatiquement en fonction de l'utilisation faite du décodeur, l'historique peut aussi être renseigné manuellement par un utilisateur.

A noter que pour la réalisation du procédé, le point d'accès GW est équipé de modules suivants :
- un module d'accès apte à accéder à une pluralité de correspondances, dite table de correspondances, entre les adresses et au moins un paramètre identifiant l'équipement,
- une module de réception d'une une commande de réveil de l'équipement, la commande incluant une adresse (@MAC2),
- un module de recoupement dans la table afin de déterminer des adresses relatives à l'équipement ;
- un module de transmission apte à transmettre depuis le dispositif d'accès à destination de l'équipement au moins une commande de réveil incluant une adresse résultante de l'étape de recoupement.

Le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

## Revendications

1. Procédé de réveil d'un équipement (STB) connecté à un premier réseau (RL) comprenant un dispositif d'accès (GW) via lequel l'équipement est susceptible d'accéder à un deuxième réseau, l'équipement comprenant une pluralité d'interfaces réseau et des adresses respectives (@MAC1,C@MAC2), pour la communication avec le dispositif d'accès, **caractérisé en ce qu'**il comprend une étape de mémorisation préalable dans une mémoire accessible par le dispositif d'accès d'une pluralité de correspondances, dite table de correspondances, entre les adresses, et **en ce qu'**il comprend, lorsque le dispositif d'accès reçoit une commande de réveil de l'équipement, la commande incluant une adresse (@MAC1),
- une étape de recoupement dans la table afin de déterminer l' adresse (@MAC1,@MAC2) liée à l'adresse reçue (@MAC1) ;
- une étape de transmission depuis le dispositif d'accès à destination de l'équipement de plusieurs commandes de réveil, les commandes incluant les adresses (@MAC1,@MAC2) résultantes de l'étape de recoupement.

2. Procédé selon la revendication 1, **caractérisé en ce que** le dispositif d'accès mémorise l'adresse de la dernière interface utilisée, et **en ce que** lors de l'étape de transmission, une commande de réveil est transmise avec cette adresse si celle-ci résulte de l'étape de recoupement.

3. Procédé selon la revendication 2, **caractérisé en ce que** la mémoire stocke un historique des interfaces utilisées en fonction du temps, **en ce que** l'adresse de l'équipement à réveiller est déterminée en fonction de l'heure courante et cet historique et **en ce qu'**une commande de réveil est transmise avec cette adresse si celle-ci résulte de l'étape de recoupement.

4. Procédé selon la revendication 1, **caractérisé en ce que** l'étape de mémorisation est précédée d'une étape de réception d'une requête d'enregistrement, DHCP, de l'équipement, la requête incluant l'adresse de l'équipement et au moins un paramètre identifiant l'équipement.

5. Dispositif d'accès (GW) s'intercalant entre un premier réseau (RL) comprenant un équipement (STB), et un deuxième réseau, l'équipement comprenant une pluralité d'interfaces réseau et des adresses respectives (@MAC1,@MAC2) pour la communication avec le dispositif d'accès, **caractérisé en ce qu'**il comprend :
- un module d'accès apte à accéder à une pluralité de correspondances, dite table de correspondances, entre les adresses ;
- un module de réception d'une commande de réveil de l'équipement, la commande incluant une adresse (@MAC1) ;
- un module de recoupement dans la table afin de déterminer l' adresse (@MAC1,@MAC2) liée à l'adresse reçue (@MAC1);
- un module de transmission apte à transmettre depuis le dispositif d'accès à destination de l'équipement plusieurs commandes de réveil, les commandes incluant les adresses (@MAC1,@MAC2) résultantes de l'étape de recoupement..

6. Programme pour un dispositif utilisateur, comprenant des instructions de code de programme destinées à commander l'exécution des étapes du procédé de détection selon l'une des revendications 1 à 4 mises en œuvre par un dispositif, lorsque ledit programme est exécuté par ledit dispositif.

7. Support d'enregistrement lisible par un dispositif utilisateur sur lequel est enregistré le programme selon la revendication 6.

## Patentansprüche

1. Verfahren zum Aufwecken eines Geräts (STB), das mit einem ersten Netzwerk (RL) verbunden ist, das eine Zugriffsvorrichtung (GW) aufweist, über die das Gerät auf ein zweites Netzwerk zugreifen kann, wobei das Gerät eine Vielzahl von Netzwerkschnittstellen und entsprechende Adressen (@MAC1, @MAC2) für die Kommunikation mit der Zugriffsvorrichtung aufweist, **dadurch gekennzeichnet, dass** es einen Schritt zum vorausgehenden Speichern einer Vielzahl von Entsprechungen zwischen den Adressen, die als Entsprechungstabelle bezeichnet wird, in einem Speicher aufweist, auf den die Zugriffsvorrichtung zugreifen kann, und dass es Folgendes aufweist, wenn die Zugriffsvorrichtung einen Befehl zum Aufwecken des Geräts empfängt, wobei der Befehl eine Adresse (@MAC1) enthält:
- einen Schritt zum Abgleichen in der Tabelle, um die mit der empfangenen Adresse (@MAC1) verknüpfte Adresse (@MAC1, @MAC2) zu bestimmen;
- einen Schritt zum Übertragen von mehreren Aufweckbefehlen von der Zugriffsvorrichtung an das Gerät, wobei die Befehle die resultierenden Adressen (@MAC1, @MAC2) aus dem Schritt zum Abgleichen enthalten.

2. Verfahren nach Anspruch 1, **dadurch gekennzeichnet, dass** die Zugriffsvorrichtung die Adresse der letzten verwendeten Schnittstelle speichert und dass während des Schritts zum Übertragen ein Aufweckbefehl mit dieser Adresse übertragen wird, wenn sie aus dem Schritt zum Abgleichen resultiert.

3. Verfahren nach Anspruch 2, **dadurch gekennzeichnet, dass** der Speicher eine Historie der verwendeten Schnittstellen in Abhängigkeit von der Zeit speichert und dass die Adresse des aufzuweckenden Geräts in Abhängigkeit von der aktuellen Zeit und dieser Historie bestimmt wird und dass ein Aufweckbefehl mit dieser Adresse übertragen wird, wenn sie aus dem Schritt zum Abgleichen resultiert.

4. Verfahren nach Anspruch 1, **dadurch gekennzeichnet, dass** dem Schritt zum Speichern ein Schritt zum Empfangen einer Registrierungsanforderung, DHCP, des Geräts vorausgeht, wobei die Anforderung die Adresse des Geräts enthält und mindestens einen Parameter, der das Gerät identifiziert.

5. Zugriffsvorrichtung (GW) die zwischen einem ersten Netzwerk (RL), das ein Gerät (STB) aufweist, und einem zweiten Netzwerk angeordnet ist, wobei das Gerät eine Vielzahl von Netzwerkschnittstellen und entsprechende Adressen (@MAC1, @MAC2) für die Kommunikation mit der Zugriffsvorrichtung aufweist, **dadurch gekennzeichnet, dass** sie Folgendes aufweist:
- ein Modul zum Zugreifen, das auf eine Vielzahl von Entsprechungen zwischen den Adressen, die als Entsprechungstabelle bezeichnet wird, zugreifen kann;
- ein Modul zum Empfangen eines Befehls zum Aufwecken des Geräts, wobei der Befehl eine Adresse (@MAC1) enthält;
- ein Modul zum Abgleichen in der Tabelle, um die mit der empfangenen Adresse (@MAC1) verknüpfte Adresse (@MAC1, @MAC2) zu bestimmen;
- ein Modul zum Übertragen, das geeignet ist, mehrere Aufweckbefehle von der Zugriffsvorrichtung an das Gerät zu übertragen, wobei die Befehle die resultierenden Adressen (@MAC1, @MAC2) aus dem Schritt zum Abgleichen enthalten.

6. Programm für ein Benutzergerät, das Programmcodeanweisungen aufweist, die das Ausführen der Schritte des Verfahrens zum Erkennen nach einem der Ansprüche 1 bis 4 steuern soll, die von einem Gerät durchgeführt werden, wenn das Programm von dem Gerät ausgeführt wird.

7. Speichermedium, das von einem Benutzergerät gelesen werden kann, auf dem das Programm nach Anspruch 6 gespeichert ist.

## Claims

1. Method for waking up a device (STB) connected to a first network (RL) comprising an access apparatus (GW) via which the device is able to access a second network, the device comprising a plurality of network interfaces and respective addresses (@MAC1,@MAC2), for communication with the access apparatus, **characterized in that** it comprises a step of prior storage in a memory accessible by the access apparatus of a plurality of correspondences, termed correspondence table, between the addresses, and **in that** it comprises, when the access apparatus receives a wakeup command in respect of the device, the command including an address (@MAC1) ,
- a step of cross-referencing in the table so as to determine the address (@MAC1,@MAC2) linked with the address received (@MAC1);
- a step of transmission from the access apparatus destined for the device of several wakeup commands, the commands including the addresses (@MAC1,@MAC2) resulting from the cross-referencing step.

2. Method according to Claim 1, **characterized in that** the access apparatus stores the address of the last interface used, and **in that** during the transmission step, a wakeup command is transmitted with this address if the latter results from the cross-referencing step.

3. Method according to Claim 2, **characterized in that** the memory stores a history of the interfaces used as a function of time, **in that** the address of the device to be woken up is determined as a function of the current time and this history and **in that** a wakeup command is transmitted with this address if the latter results from the cross-referencing step.

4. Method according to Claim 1, **characterized in that** the storage step is preceded by a step of receiving a query for recording, DHCP, of the device, the query including the address of the device and at least one parameter identifying the device.

5. Access apparatus (GW) which is interposed between a first network (RL) comprising a device (STB), and a second network, the device comprising a plurality of network interfaces and respective addresses (@MAC1,@MAC2) for communication with the access apparatus, **characterized in that** it comprises:
- an access module able to access a plurality of correspondences, termed correspondence table, between the addresses;
- a module for receiving a wakeup command in respect of the device, the command including an address (@MAC1) ;
- a module for cross-referencing in the table so as to determine the address (@MAC1,@MAC2) linked with the address received (@MAC1);
- a transmission module able to transmit from the access apparatus destined for the device several wakeup commands, the commands including the addresses (@MAC1,@MAC2) resulting from the cross-referencing step.

6. Program for a user apparatus, comprising program code instructions intended to control the execution of the steps of the detection method according to one of Claims 1 to 4 which are implemented by an apparatus, when said program is executed by said apparatus.

7. Recording medium readable by a user apparatus on which is recorded the program according to Claim 6.
